# EUROPÄISCHE PATENTANMELDUNG

(11) **EP 1 750 184 A2**
(43) Veröffentlichungstag der Anmeldung: **07.02.2007**
(21) Anmeldenummer: 06014326.0
(22) Anmeldetag: 11.07.2006
(51) Int. Cl.: G05B 19/042

(54) **Verfahren zur sicheren Bedienung und Programmierung sicherheitsgerichteter Geräte**

(30) Priorität: 03.08.2005 DE 102005036475
(71) Anmelder: Kress, Wolfram, 53721 Siegburg (DE)
(72) Erfinder: Kress, Wolfram, 53721 Siegburg (DE)

(57) **Zusammenfassung**

Verfahren zur sicheren Bedienung oder Programmierung von sicherheitsgerichteten Geräten **60** mittels Personal Computer **10** durch redundante Implementierung der Bedien- und Programmierfunktion **25** und der Codeerzeugungsfunktion **40** im sicherheitsgerichteten Gerät **60.**

## Beschreibung

### Stand der Technik

Sicherheitssteuerungen bzw. sicherheitsgerichtete Geräte und deren Programmierung sind u. a. beschrieben in DE10108962A1 (Zeile 16 bis 49).

Wie beschrieben sind PC basierende Bedien- und Programmieroberflächen mit Sicherheitsrisiken behaftet.

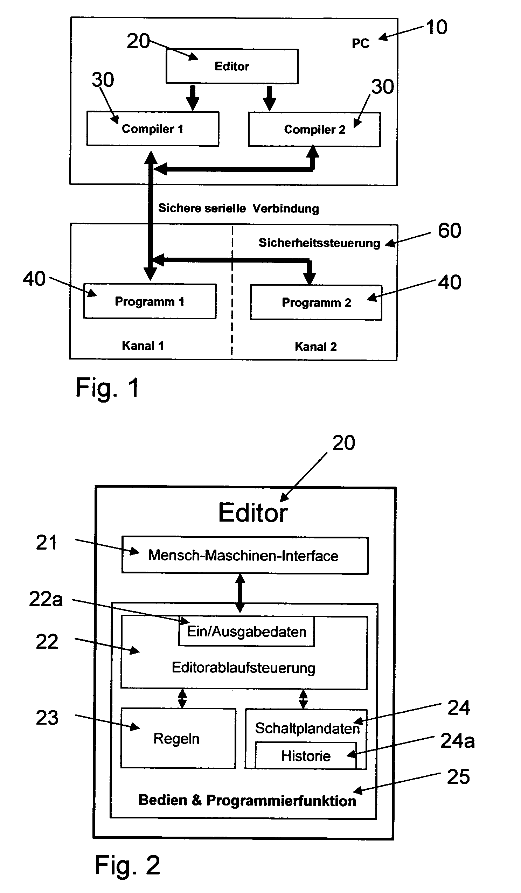

Typischerweise wird ein Kontaktplan nach IEC 61131 durch einen auf dem PC **10** (Fig. 1) ablaufenden Editor **20** mittels Mouse und Tastatur eingegeben. Dieser Kontaktaktplan wird dann anschließend durch Compiler 30, die auf dem PC ablaufen, in Programme **40** übersetzt, welche durch die Sicherheitssteuerung **60** ausgeführt werden können.

Schwachpunkt dieses Verfahrens ist die einkanalige nicht redundante Erstellung des Kontaktplans bzw. des Applikationsprogramms auf dem PC. Es steht nur ein Rechner, ein Bildschirm, eine Mouse und eine Tastatur zur Verfügung. Die Programmcodeerzeugung und die Ausführung der Programme ist im Gegensatz hierzu meist redundant, d. h. zweikanalig, ausgeführt.

Gefährliche Anwendungen wie z. B. Pressen und Schneidemaschinen müssen so genannten Sicherklassen SIL (Safety Integrity Level) nach IEC 61508 entsprechen. Dies gilt insbesondere für elektronische sicherheitsgerichtete Geräte mit denen die Maschinen ausgerüstet werden. Zur Zulassung und Zertifizierung werden harte Anforderungen an diese Geräte gestellt. Um die geforderten Sicherheitsklassen zu erreichen müssen Fehler beherrschende und Fehler vermeidende Maßnahmen in der Entwicklung und Produktion von den Herstellern durchgeführt werden. Fehler vermeidende Maßnahmen sind mit qualitätssichernden Maßnahmen zu vergleichen. Sie sollen Fehler bei der Entwicklung und Produktion von sicherheitsgerichteten Geräten vermeiden. Fehlerbeherrschende Maßnahmen dagegen verhindern Gefahren im Betrieb von sicherheitsrelevanten Geräten. Tritt z. B. ein Fehler im Betrieb eines Gerätes auf, wird trotzdem die sichere Steuerungsfunktion aufrechterhalten. Dies wird z. B. durch die redundante Auslegung einer Steuerung erreicht. Fällt ein Kanal aus, so kann der zweite Kanal die Maschinen noch in den sicheren Zustand steuern. Zur Zulassung und Zertifizierung sicherheitsgerichteter Geräte wird ein Mix von beiden Maßnahmenarten gefordert. Mangelnde Fehler vermeidenden Maßnahmen können zum Teil durch Fehler beherrschende Maßnahmen kompensiert werden. Umgekehrt können jedoch nur schwierig Fehler beherrschende Maßnahmen durch Fehler vermeidende Maßnahmen aufgewogen werden. Fehler vermeidenden Maßnahmen haben den Nachteil, dass aufwendige und inflexible Softwareprüfungen (Codeinspektionen) durchgeführt werden müssen. Eine redundante Auslegung des Editors würde auf der Seite der Fehler beherrschenden Maßnahmen positiv zur Buche schlagen. Aufwendige und teuere Codeinspektionen können damit deutlich reduziert werden. Einkanalige Softwarestrukturen, wie auf dem PC ablaufende Editoren, stellen in vielen Fällen ein erhebliches Gefährdungspotential dar.

Entscheidend ist, dass auch wirklich der richtige über den Editor eingegebene Schaltplan übersetzt wurde. Ändert zum Beispiel der Benutzer eine Schaltplanzeile im sichtbaren Bildschirmbereich, so kann im Fehlerfall des Editors auf dem PC nicht ausgeschlossen werden, dass gleichzeitig eine Änderung am Programm (Schaltplan) im nicht sichtbaren Bildschirmbereich stattfand. Dies kann zu gefährlichen Zuständen in Maschinen und Anlagen führen. Eine nicht gerade elegante Lösung um den oben unterstellten Fehlerfall zu beherrschen wäre, den Schaltplan auszudrucken und dann anschließend vom Applikationsprogrammierer mit dem Schaltplan auf dem Bildschirm zu vergleichen. Diese Prüfung müsste dann als Bestandteil einer vorgeschriebenen Sicherheitsprozedur per Unterschrift bestätigt werden. Da dies eine sehr aufwendige Verfahrensweise darstellt, ist es erheblich zu bezweifeln, dass diese Maßnahme wirklich immer durchgeführt wird. Auch wird diese Verlagerung der Verantwortung auf den Menschen kaum Akzeptanz finden.

Allen bekannten Lösungen ist gemein, dass die nicht vorhandene Redundanz des Editors **20** (Fig. 1) nur durch sehr aufwendige Ersatzmaßnahmen, insbesondere durch Software-Code-Prüfungen, ausgeglichen werden kann um Akzeptanz bei den zertifizierenden Stellen zu finden. Jede Änderung im Editor **20** zwingt zu umfangreichen wiederholenden Softwareinspektion durch die zertifizierenden Stellen, die in der Produktpflege und Weiterentwicklung sehr hinderlich sein können.

### Aufgabenstellung

Aufgabe der Erfindung ist es, die Sicherheitslücke bei der Bedienung, Parametrisierung und Programmierung von Sicherheitssteuerungen mittels Personal Computern zu beseitigen und eine weitestgehend redundante Bedien- und Programmieroberfläche (Editor) für sicherheitsrelevante Anwendungen zu realisieren. Aufwendige Software-Code-Prüfungen im Zulassungsprozess durch zertifizierende Stellen (z.B. TÜV oder Berufsgenossenschaften) sollen weitestgehend vermieden werden.

Um dem Trend zur Dezentralisierung in der Automatisierung Rechnung zu tragen, sollen moderne Client Server Architekturen zum Einsatz kommen. Die Realisierung einer sicherheitsgerichteten Bedien- und Programmieroberfläche auf Basis eines Internetbrowsers und Webservers soll die Bedienung, Parametrisierung und Programmierung sicherheitsrelevanter Anwendungen über das Internet mit all seinen Vorteilen ermöglichen.

### Prinzipielle Ausführung

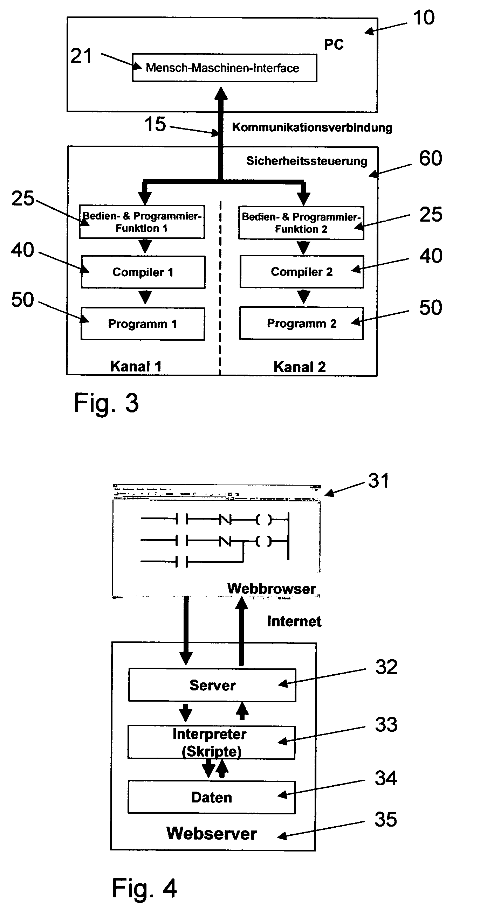

In Fig. 2 sind die elementaren Funktionen eines Bedien- und Programmier- Editors **20** abgebildet. Das Mensch-Maschinen-Interface **21** steuert die PC-Peripheriefunktionen wie z. B. den Bildaufbau und die Abfrage von Tastatur und Mousezeiger. Die Editorablaufsteuerung **22** beinhaltet die gesamte aktive und logische Steuerung aller Bedien- und Programmierfunktionen, die durch die hinterlegten Regeln **23** auf Zulässigkeit überprüft werden. Im Bereich Schaltplandaten **24** werden alle relevanten Ergebnisse wie z. B. der erzeugte Kontaktplan und die Historie **24a** seiner Entstehung abgelegt. Diese Daten sind Basis der Codeerzeugung **40** (Fig.3). In allen Editorfunktionen können Fehler und Verfälschungen auftreten. Besonders kritisch sind Fehler im Bereich der Editorablaufsteuerung **22,** Regeln **23** und Schaltplandaten **24,** da sie in den meisten Fällen durch den Benutzer nicht wahrgenommen werden können. Fehler in der Mensch-Maschinen-Interface Funktion **21** offenbaren sich dem Benutzer sehr schnell, da auf jede Benutzeranforderung wie z. B. ein Mouseclick , eine erwartete Reaktion zu erfolgen hat. Bleibt diese aus oder ist sie unerwartet, wird der Fehler durch den Benutzer leicht erkannt.

Im Gegensatz zum Stand der Technik erlaubt die Verlagerung der gesamten Bedien- und Programmierfunktion **25** (Fig. 3) in die Steuerung **60** deren redundanten Aufbau.

Wie in Fig. 3 dargestellt, verbleibt nur die Mensch-Maschinen-Interface Funktion **21** einkanalig auf dem PC **10.** Die gesamte aktive Steuerung des Editors **20** ist damit auf beiden Kanälen des sicherheitsgerichteten Geräts **60** ablauffähig und kann jederzeit auf Gleichheit überprüft werden. Alle Ein/Ausgabedaten **22a** zum Mensch-Maschinen-Interface **21** und Schaltplandaten **24** inklusive deren Historie **24a** werden zur Laufzeit regelmäßig einem Vergleich in beiden Kanälen des sicherheitsgerichteten Gerätes **60** unterzogen. Damit werden Fehler rechtzeitig erkannt und verhindern Gefährdungen.

Auf dem PC müssen nur die Funktionen verbleiben, die sich aufgrund der impliziten Einkanaligkeit nicht redundant realisieren lassen, z. B. der Bildaufbau (ein Monitor) oder die Abfrage der einen Tastatur. Dies ist die Mensch-Maschinen-Interface Funktion **21,** welche z. B. durch ein Terminalprogramm realisiert werden kann. Die eigentliche und wesentliche Funktionalität des Editors **20** (Fig. 1, 2) ist in die Steuerung verlagert. Dort ist sie als Bedien- und Programmierfunktion **25** redundant implementiert und es werden stetig Benutzeranforderungen und Bildschirmausgaben in Form der Ein/Ausgabedaten **22a** auf Gleichheit überprüft. Nur im Falle der Gleichheit werden Benutzeranforderungen akzeptiert bzw. Bildschirmausgaben zum PC ausgegeben.

Wird Ungleichheit der Ein/Ausgabedaten **22a,** der Schaltplandaten **24** bzw. der Historie **24a** durch die redundanten Steuerungskanäle des sicherheitsgerichteten Geräts **60** festgestellt, wird eine sicherheitsgerichtete Funktion ausgelöst. Z. B. wird das sicherheitsgerichtete Gerät **60** stillgesetzt oder verbleibt im letzten Zustand bevor die Ungleichheit festgestellt wurde. Eine geeignete Meldung für den Anwender muss zum Mensch-Maschinen-Interface **11** abgesetzt werden und über den fatalen Fehler im System informieren. Eine Fortsetzung des Programmiervorgangs sollte erst nach umfangreichen und erfolgreich durchgeführten Selbsttests im sicherheitsgerichteten Gerät erfolgen können. Die Aufzeichnung der Historie **24a,** hilft den Fortsetzungspunkt der Programmierung festzulegen. Hierzu werden die Schaltplandaten **24** in den letzten Zustand vor Feststellung der Ungleichheit überführt. Sollten sich im Anschluss weitere Fehler häufen, so wird das System sicher stillgesetzt. Im einfachsten Fall ist dies eine durch den Anwender nicht aufzuhebende Abschaltung. Das sicherheitsgerichtete Gerät muss ausgetauscht werden.

### Ausführung mittels Webtechnologien

Im allgemeinen findet die Nutzung von Webservern im Internet mittels Browsern (Internetexplorern) statt. Ein Nutzer stellt seine Anforderung durch Anklicken des entsprechenden Links auf Seiten des Internets. Der Browser (Client) leitet einen HTTP oder HTTPS Request (per SSL verschlüsselte HTTP-Verbindung) an den im Link adressierten Webserver.

Im einfachsten Fall liefert ein Webserver statische Daten wie HTML-Seiten, Stylesheets oder Bilder und Grafiken zurück an den Browser, der wiederum für die Darstellung verantwortlich ist. Um eine interaktive Bedienung und Programmierung von Steuerungen zu erreichen, müssen dynamische, d.h. beim Abruf erzeugte Daten, zurück an den Browser geliefert werden. Dies kann z.B. durch den Einsatz von Skripten (PHP, JSP, ASP), Server-Containern (Servlets, ASP.NET) oder Webservices (Soap) erfolgen. Durch die Verwendung dynamischer Seiten wird die interaktive Benutzerführung ermöglicht.

Zum Beispiel startet ein Client (Webbrowser) **31** (Fig. 4) eine Anfrage in Form eines adressierten Scripts an den Webserver **35.** Der Server **32** nimmt die Anfrage entgegen und leitet diese an einen Interpreter **33** weiter. Der Interpreter arbeitet das Script ab, wobei je nach Vorgeschichte dynamisch auf die Anfrage reagiert werden kann. Anschließend gibt der Interpreter das Ergebnis zum Beispiel eine HTML-Datei mit weiteren Links an den Server **32** zurück. Dieser wiederum leitet das Ergebnis an den Client **31** weiter.

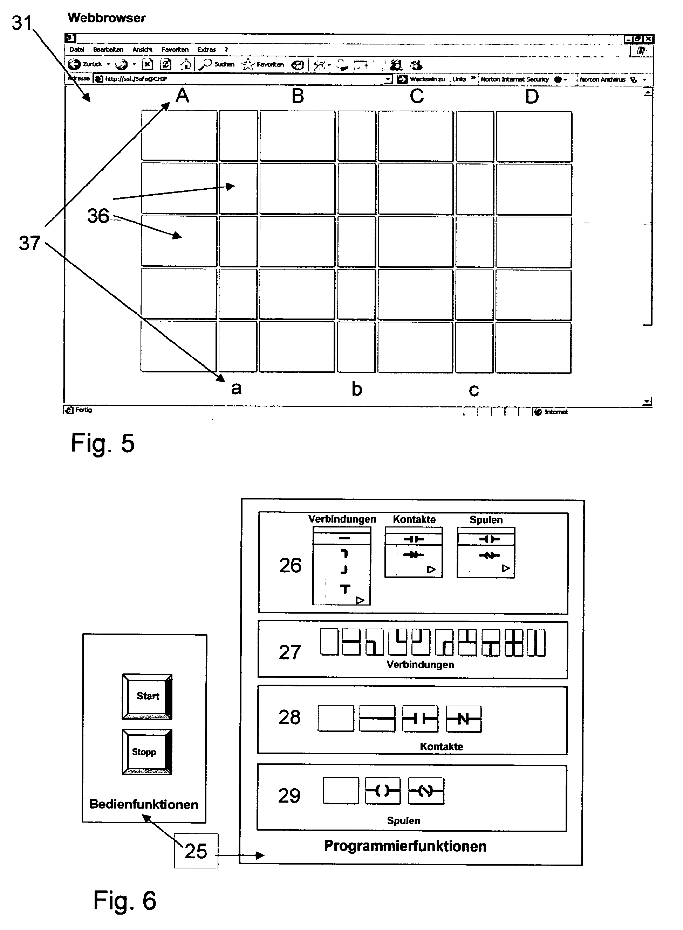

Mit dieser Technologie ist es möglich eine Webserver basierende Bedien- und Programmieroberfläche für Steuerungen aufzubauen. Ein Arbeitsblatt, repräsentiert durch eine Webseite, wird z. B. in Kacheln **36** (Fig. 5) aufgeteilt. Jeder Kachel wird zwecks Beeinflussung ein Link zugeordnet. Über Skripte kann sichergestellt werden, dass die Kacheln nur in fest vorbestimmter Weise beeinflusst werden können.

Das Regelwerk ist so aufgebaut, dass ein elektrischer Schaltplan erstellt werden kann, der auf Richtigkeit bzw. Zulässigkeit geprüft ist. Aus diesem Schaltplan wird in der Steuerung ein Code erzeugt, der entweder direkt ablauffähig ist oder als Ablaufsteuerung interpretiert werden kann.

Im folgenden wird eine Möglichkeit der Programmerstellung mittels Webserver **35** und Webbrowser **31** (Fig. 4) gezeigt:

Ziel dieses Beispiels ist es, einen elektrischen Schaltplan in bekannter Kontaktplandarstellung nach IEC 61131 zu erzeugen.

Zu Beginn der Programmierung befinden sich nur "leere" Kacheln **36,** (Fig. 5), d.h. ohne Steuerungsfunktion, mit Links auf dem Arbeitsblatt. Durch die Links werden vom Client (PC) Skripte angesteuert, welche auf dem Webserver zum Ablauf gebracht werden.

In den Spalten A, B, C (Fig. 5) können im einfachsten Fall die Programmierfunktionen Kontakte **28** (Fig. 6) "platziert" werden. In Spalte D können nur Spulen **29** aktiviert werden. Verbindungselemente **27** sind in den Spalten a, b, c aktivierbar.

Dies geschieht durch das "Klicken" auf eine Kachel. Der Webserver, gesteuert nach festen Regeln (Skripte), bietet dem Benutzer in Form von Pull down Menüs **26,** die auf dem Arbeitsblatt erscheinen, die jeweils möglichen bzw. erlaubten Programmierfunktionen zur Auswahl an. Eine Erweiterung dieser Programmierung um weitere Spalten und geeignete Funktionsbausteine ist leicht vorstellbar.

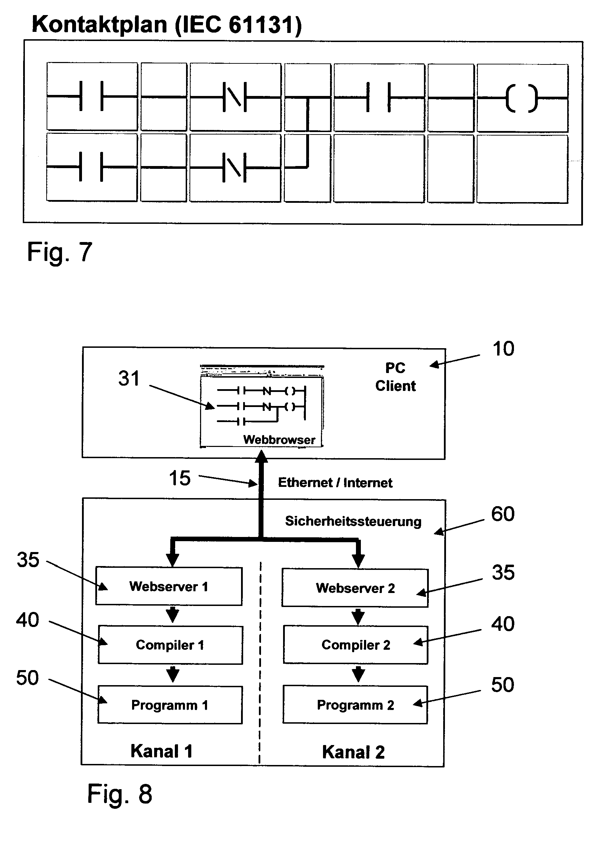

Wie in Fig. 7 dargestellt, kann auf diese Weise ein elektrischer Schaltplan (Kontaktplan) über den Webserver auf der Steuerung erzeugt, dort kompiliert und zum Ablauf gebracht werden.

Die Bedienung der Steuerung, z. B. Start/Stopp Funktionen und auch die Parametrisierung kann mit dem gleichen Verfahren realisiert werden.

Das bisher beschriebene Bedien- und Programmierkonzept lässt sich wie folgt in eine sicherheitsgerichtete Lösung überführen:

In der zweikanaligen Sicherheitsarchitektur der Steuerung **60** (Fig. 8) werden auch die Webserver **35** redundant ausgelegt. D. h. auf beiden Zentraleinheiten der beiden Steuerungskanälen ist je ein Webserver installiert. Beide Webserver erhalten nun vom Client **10** über das Ethemet/Internet **15** ihre Anforderungen. Nur einer der beiden Webserver kann funktionsbedingt auf die vom Webbrowser **31** angeforderten Dienste antworten. Dies geschieht jedoch erst nach einem Vergleich der empfangenen Anforderungen und des Ausgabeergebnisses der Webserver durch beide Steuerungskanäle. Dies kann in ähnlicher Weise wie in Abschnitt "prinzipielle Ausführung" beschrieben durchgeführt werden.

Beide Webserver-Interpreter **35** handeln nach den gleichen Regeln, sodass im fehlerfreien Fall in beiden Kanälen ein gleiches Steuerungsprogrammabbild (Schaltplandaten und Historie) entstehen muss, welches wiederum von beiden Steuerungskanälen ständig auf Gleichheit überprüft wird. Dieses Abbild ist die Datenbasis für die redundante Codeerzeugung **40,** welche ebenfalls einem Vergleich unterzogen wird.

In dieser Ausführungsform ist die Funktionalität des Webbrowsers **11** vergleichbar mit dem Mensch-Maschinen-Interface **21** in Fig. 3. Der Webserver 35 ist vergleichbar mit der Bedien- und Programmierfunktion **25.**

Durch die Redundanz der Bedien- und Programmierfunktion **25** ist die Wahrscheinlichkeit, dass unentdeckte Fehler zu Gefahren führen können, deutlich reduziert.

Der oben unterstellte Fehler einer unbeabsichtigten und unentdeckten Programmänderung ist durch die Redundanz der Bedien- und Programmierfunktion **25** bzw. der Webserver **35** im Vergleich zum Stand der Technik weitestgehend ausgeschlossen.

Bleibt ein unterstellter Fehler im Browser selbst. Sollte hier eine unbeabsichtigte Programmänderung ausgelöst werden, wird durch die Redundanz der Bedien- und Programmierfunktion **25** sichergestellt, dass diese Änderung vom Programmierer wahrgenommen werden sollte. Jeder vom Browser ausgelöste Link wird mit einer entsprechenden HTML- oder XML- Seite durch den Webserver **35** beantwortet. Um die Darstellung der Änderung zu verhindern, müssten im Gegensatz zur Praxis der Sicherheitsbeurteilungen durch die zertifizierenden Stellen gleichzeitig weitere Fehler im Browser unterstellt werden.

## Patentansprüche

1. Verfahren zur sicheren Bedienung oder Programmierung von sicherheitsgerichteten Geräten **60** mittels Personal Computer **10** durch redundante Implementierung der Bedien- und Programmierfunktion **25** und der Codeerzeugungsfunktion **40** im sicherheitsgerichteten Gerät **60.**

2. Verfahren nach Anspruch 1, bei welchem durch ständigen Vergleich der redundanten Ein-Ausgabedaten **22a** der Editorablausteuerung **22** und der resultierenden Schaltplandaten **24** inklusive der aufgezeichneten Historie **24a** zur Laufzeit Fehler aufgedeckt werden.

3. Verfahren nach Anspruch 1 und 2, bei welchem zu einem Zeitpunkt Ungleichheit der Ein-Ausgabedaten **22a,** der Schaltplandaten **24** oder der Historie **24a** durch die Steuerungskanäle festgestellt wird, der sicher Zustand des sicherheitsgerichteten Gerätes **60** aufrecht erhalten wird und eine geeignete Nachricht zum Mensch-Maschinen-Interface **21** gesendet wird.

4. Verfahren nach Anspruch 1 bis 3, bei welchem mittels Webserver **35** im sicherheitsgerichteten Gerät **60** und Webbrowsern **31** auf dem PC **10** die Bedienung und Programmierung realisiert wird.

5. Verfahren nach Anspruch 1 bis 4, bei welchem die Bedien- und Programmierfunktion **25** nach festen Regeln dynamisch zur Laufzeit erzeugt werden.

6. Verfahren nach Anspruch 1 bis 5, bei welchem zur interaktiven Benutzerführung Skripte, Server-Container oder Webservices verwendet werden.

7. Verfahren nach Anspruch 1 bis 6, bei welchem zur sicherheitsgerichteten Kommunikation **15** zwischen Client und Server SSL verschlüsselte http-Verbindungen (HTTPS) genutzt werden.

8. Verfahren nach Anspruch 1, bei welchem die einzelnen Bedien- und Programmierfunktionen **25** mindestens aus Kontakten **28,** Spulen **29,** und Verbindungselementen **27** bestehen.

9. Verfahren nach Anspruch 1 und 8, bei welchem Verbindungselemente **27** in den Arbeitsblattspalten **37** a, b und c aktiviert werden können.

10. Verfahren nach Anspruch 1, 8 und 9, bei welchem Kontakte **28** in den Arbeitsblattspalten **37** A, B und C aktiviert werden können.

11. Verfahren nach Anspruch 1, 8 bis 10, bei welchem Spulen **29** in der Arbeitsblattspalte **37** D aktiviert werden können.

12. Verfahren nach Anspruch 1, 8 bis 11, bei welchem die Anzahl der Arbeitsblattspalten **37** in geeigneter Weise erhöht wird.

13. Sichere Bedien- und Programmieroberfläche, wobei die Bedien- und Programmierfunktion **25** derart implementiert ist, dass sie zur Durchführung des Verfahrens nach einem der Ansprüche 1 bis 11 geeignet sind.
